# EUROPEAN PATENT SPECIFICATION

(11) **EP 2 444 507 B1**
(45) Date of publication and mention of the grant of the patent: **04.03.2015**
(21) Application number: 10188264.5
(22) Date of filing: 20.10.2010
(51) Int. Cl.: C22B 3/10, C22B 3/44, C22B 7/00, C22B 59/00, H01M 10/54

(54) **Recovery of rare earth metals from waste material by leaching in non-oxidizing acid and by precipitating using sulphates**
Rückgewinnung von Seltenerdmetallen aus Abfallmaterial durch Auslaugung in nichtoxidierender Säure und durch Ausfällung mit Sulphaten
Récupération de métaux de terres rares à partir de déchets par lessivage dans un acide non oxydant et par précipitation avec des sulfates

(43) Date of publication of application: 25.04.2012
(73) Proprietor: Montanuniversität Leoben, 8700 Leoben (AT)
(72) Inventor: Luidold, Stefan, 8700 Leoben (AT); Antrekowitsch, Helmut, 8700 Leoben (AT)
(74) Representative: Dilg, Haeusler, Schindelmann Patentanwaltsgesellschaft mbH

(56) References cited:
- WO-A1-03/104149
- DD-A1- 240 756
- DE-C2- 3 502 907
- GB-A- 510 198
- GB-A- 855 481
- US-A- 6 110 433
- P. ZHANG ET AL.: "Hydrometallurgical process for recovery of metal values from spent nickel-metal hydride secondary batteries", HYDROMETALLURGY, vol. 50, 1998, - 1998, pages 61-75, XP002629905,
- D. ASSUMPCAO BERTUOL ET AL.: "Spent NiMH batteries - The role of selective precipitation in recovery of valuable metals", JOURNAL OF POWER SOURCES, vol. 193, 2009, pages 914-923, XP002629906,

## Description

### Field of the invention

The invention relates to a method of recycling rare earth metals within a waste material.

### Background of the invention

Currently, only a very small percentage of consumer disposable NiMH batteries are recycled to recover rare earth materials. Whilst the exact chemical make-up varies from type to type, most batteries contain heavy metals, which are the main cause for environmental concern. When disposed of incorrectly, these heavy metals may leak into the ground when the battery casing corrodes. Furthermore, many batteries contain valuable materials such as metals. Thus, the recycling of batteries becomes more and more important in view of legal requirements and also in the view of the rising number of consumed batteries.

DE 197 27 880 discloses valuable material recovery from nickel/metal hydride cells which is carried out by granulating the cells to up to 15 mm particle size, heat treating at 750 ± 150 °C for 1-20 mins. under restricted air access and oxidizing conditions, sieving at a separation size of 0.7-2.0 mm to obtain two particle size fractions, subjection the coarser fraction to attrition treatment and re-sieving at a separation size of 0.7-2.0 mm, and combining the remaining sieve fractions from the heat treating step and the sieving step with the finer fraction and subjecting to metallurgical or chemical processing.

"The UMICORE Process: Recycling of Li-ion and NiMH batteries via a unique industrial Closed Loop" (available via http://www.batteryrecycling.umicore.com/download/show_Processdescriptionfor website07042010.pdf) and dated April 2010 is a closed loop process for recycling of NiMH batteries and is composed of the five steps of collection and reception of batteries, smelting and energetic valorisation, refining and purification of metals, oxidation of Cobalt chloride into Cobalt oxide, and production of Lithium metal oxide for new batteries.

Hence, a large majority of the presently implemented industrial processes for recycling of NiMH batteries is based on a pyrometallurgic approach, wherein as a valuable fraction, a nickel comprising alloy is obtained which can be used as a substitute for ferronickel in stainless steel industry. The above-mentioned UMICORE process is based on a smelting of Li-ion and NiMH batteries to obtain a metal and a slag phase. The slag finds use in concrete manufacture. Furthermore, a hydrometallurgical refining of the alloy obtained from the smelting process results in pure nickel and cobalt which can be converted into nickel hydroxide and lithium cobaltate, in order to be used again in rechargeable batteries.

Also hydrometallurgical recycling procedures have been proposed:

DE 44 45 495 A1 discloses that an H₂SO₄/H₂O₂ mixture that dissolves in particular the AB₅ type hydrogen storage alloys that form the main component of negative electrodes without leaving any residues is suitable to disintegrate the fine fraction containing the positive and negative electrode active material mechanically separated from scrap accumulators. Excess H₂O₂ is then destroyed and Fe³⁺ is reduced into Fe²⁺ by flowing the strongly acid disintegration solution over the metallic coarse fraction, so that the rare earths from the storage alloys may be precipitated as double sulphates without Fe impurities. Ni and Co may be recovered together by solvent extraction and simultaneous electrolysis. The separated product may be used as pre-alloy for producing new hydrogen storage alloys. The process may be carried out without problems even when because of sorting errors the scrap accumulators contain a small proportion of Ni/Cd batteries.

L. Pietrelli, B. Bellomo, D. Fontana, M.R. Montereali, "Rare earths recovery from NiMH spent batteries", Hydrometallurgy 66 (2002) 135-139, discloses that Nickel-metal hydride batteries (NiMH) contain rare earths (RE) and a variety of valuable metals such as nickel and cobalt. Using a hydrometallurgical process developed for the recovery of metals from spent batteries, a selective separation of RE by precipitation of Sodium RE double sulfate can be performed. Leaching solution was obtained by using 2 M H₂SO₄ at 20 °C. The paper reports the experimental studies involving the precipitation process and the characterization by X-ray diffraction of the resulting product (Sodium RE double sulfates). It has been shown that it is possible to recover about 80% of the RE contained in spent NiMH batteries.

Linyan Li, Shengming Xu, Zhongjun Ju, Fang Wu, "Recovery of Ni, Co and rare earths from spent Ni-metal hydride batteries and preparation of spherical Ni(OH)2", Hydrometallurgy 100 (2009) 41-46, discloses a hydrometallurgical procedure for the separation and recovery of nickel, cobalt and rare earths (RE) from spent Ni-MH batteries. In the process of separation and recovery, the positive and negative electrode materials were merged and leached with 3 M H₂SO₄ at 95 °C. In this stage, about 94,8% of rare earths were separated from other metals due to the low solubility of RESO₄ at relatively high temperature. Then iron, zinc and manganese (together with the remaining 5.2% rare earths) were almost completely separated from nickel and cobalt by solvent extraction with 20% P204. Rare earths in the organic phase were recovered by stripping with 2 M HCl after scrubbing Zn and Mn. Most rare earth sulphates remaining in the leach residue were transformed to RE(OH)₃ by treatment with NaOH and then redissolved from the filter cake as RECl₃ by using the rare earth strip liquor and additional HCl. Cobalt was separated from nickel by solvent extraction with 20% Cyanex 272 and pure cobalt and nickel sulphates were recovered from evaporation of the strip liquor and raffinate respectively. Finally, spherical nickel hydroxide powder was synthesized from the pure nickel sulphate, which is an important starting material for Ni-MH batteries. The overall recovery efficiency for rare earths, cobalt and nickel exceeded 98%

From "Hydrometallurgical process for recovery of metal values from spent nickel-metal hydride secondary batteries", P. Zhang et al., Hydrometallurgy 50 (1998) 61-75, a completely hydrometallurgical process is known for recovery of metal values such as cobalt, nickel and rare earths from spent nickel-metal hydride secondary batteries.

From "Spent NiMH batteries- The role of selective precipitation in the recovery of valuable metals", D. Bertuol, et al., Journal of Power Sources 193 (2009) 914-923) a hydrometallurgical method of recovery of rare earths and a simple method to obtain a solution rich in Ni-Co from spent NiMH batteries is known.

DE 35 02 907 C2 discloses a process for recovering highly pure rare earth oxides from a waste rare earth phosphor containing at least Fe and/or Ca as impurities is known, which comprises dissolving the waste rare earth phosphor in an excess amount of a strong acid capable of dissolving the waste rare earth phosphor, adding to the solution at a temperature of at least 70°C oxalic acid in an amount of from 0.3 to 1.8 times the theoretical amount to obtain precipitates of rare earth oxalates, washing the precipitates with warm water having a temperature of at least 50°C and then baking them.

However, conventional recycling of waste material comprising rare earth metals suffer from a high complexity of the process and/or from a poor yield. Furthermore, the process by D. Bertuol needs a dismantling and fractionation of the batteries before the hydrometallurgical treatment.

### Object and summary of the invention

It is an object of the invention to enable rare earth metal recycling with a simple processing and a proper rate of yield.

In order to achieve the object defined above, a method of recycling rare earth metals within a waste material according to the independent claim is provided.

According to an exemplary embodiment of the invention, a method of recycling rare earth metals within a waste material is provided, wherein the method comprises acidic leaching of the waste material (particularly in a still pyrolysable solid matter, more particularly in the form of batteries reduced to small pieces are directly made subject of an acidic leaching) using a halogen acid (particularly hydrochloric acid) for solubilizing (or dissolving) metals of the waste material while maintaining non-metallic materials (such as graphite, plastic or other organic materials) of the waste material in solid form, separating the remaining solid components of the leached waste material from a solution of the solubilized (or dissolved) metals, and precipitating selectively the rare earth metals in the solution while maintaining other metals in dissolved form. The precipitating may comprise adding sulphates (for instance in the form of salts or sulphuric acid) to the solution of the solubilized metals, and adding an alkaline solution to the solution of the solubilized metals for increasing the pH-value.

The term "waste material" may particularly denote residual materials which form part of a device which has a defined functionality and has been used to provide this functionality over its entire lifetime. After expiry of the lifetime of the device, it cannot be used with sufficient performance any longer. At this stage, the material of the device is considered as a waste material, and can be made subject of a recycling process to extract at least a part of the constituents of the waste material for further use. The waste material may particularly be a still at least partially pyrolysable material, i.e. material which has not yet been treated by pyrolysis. An example for a pyrolysable material is any plastic material or polymer, since such materials are decomposed by pyrolysis. According to an embodiment such a still pyrolysable waste material (i.e. waste material which has not made subject of a pyrolysis process) may be subjected to the acidic leaching procedure.

The term "leaching" may particularly denote a process which involves the use of solutions, particularly aqueous solutions, containing an agent for lixiviating (or a lixiviant) to be brought into contact with a waste material containing a metal. The lixiviant in solution may be acidic in nature. The type and concentration of the lixiviant may be controlled to allow some degree of selectivity for the metal or metals that are to be recovered. In the leaching process, oxidation potential, temperature, and pH of the solution are adjustable parameters, and may be manipulated to promote dissolution of the desired metal component into the liquid phase.

The term "metal" may particularly denote an element, compound, or alloy characterized by high electrical conductivity. In a metal, atoms readily lose electrons to form positive ions (cations). Those ions are surrounded by delocalized electrons, which are responsible for the conductivity. Metals include groupings as transition metals, and rare earth metals.

The term "rare earth metals" or rare earth elements may particularly denote a collection of seventeen chemical elements in the periodic table, namely scandium, yttrium, and the fifteen lanthanides. Scandium and yttrium are considered rare earths since they tend to occur in the same ore deposits as the lanthanides and exhibit similar chemical properties.

The term "solubilizing" may particularly denote a process of rendering a substance soluble, particularly transferring it from a solid phase into a liquid phase. Solubilizing of metals may be achieved by altering the chemical environment of a solution in which the material, particularly a metal, is placed. Such a change of the chemical environment may be a change of the pH-value.

The term "precipitating" may particularly denote the formation of a solid in a solution during a chemical reaction. When the reaction occurs in a liquid, the solid formed is called the precipitate. The liquid remaining above the solid is in either case called the supernate or supernatant.

The term "precipitating selectively the rare earth metals" may particularly denote a process in which chemical properties (particularly the pH-value) of a solution in which various metals of the waste material are dissolved are changed so that only rare earth metals are transferred into a solid phase in the solution, whereas all other non-rare earth metals remain dissolved in the solution. Since the pH-value at which a metal goes into solution differs from metal to metal, adjustment of the pH-value also allows to control selectively which metals are dissolved and which not.

The term halogen acid" may particularly denote an acid such as HCl, HF, etc. which only attacks sufficiently ignoble metals (or base metals) such as zinc, iron, aluminum, but is not considered by the skilled person as an oxidizing agent. The contrary of non-oxidizing acids are oxidizing acids which do not only act as an acid but also act as an oxidizing agent. Examples for oxidizing acids which do not fall under the term non-oxidizing acid are sulphuric acid or nitric acid.

According to an exemplary embodiment of the invention, a process for recycling of rare earth metals and optionally other metals from used nickel metal hydride batteries and other waste material is provided. Based on waste material having a sufficiently high surface exposed for an acid attack, an acidic leaching process is carried out in order to bring the received valuable materials (rare earth metals, nickel, cobalt, other metals) as complete as possible in solution. After separation of the unsoluble components (plastic foils, etc.) for instance by filtration, a modification of the filtrate, for instance by increasing the ph-value, is performed for precipitation only of the rare earth metal compounds. The latter process is advantageously performed as selective as possible in order to make it possible to use the received solid as a base material in rare earth metal industry. Optionally, it is possible to further process the remaining solution in order to exploit one or more further valuable metals such as nickel or cobalt.

According to an embodiment, the method may synergetically combine two measures, i.e. the adding of sulphates for precipitation and the use of a halogen acid for leaching. The present inventors have surprisingly found out that taking these measures solves two problems occurring during rare earth recycling. On the one hand, it is a requirement that the majority or preferably all metals (including for instance nickel) go into solution during the leaching so that no solid metal remains after leaching. The present inventors have found out that this may be achieved to a sufficient degree by using halogen acids such as hydrochloric acid, while other acids (such as sulphuric acid) are considered to fail to obtain a corresponding result (here, nickel passivates and the like may remain at least to some extent in the solid phase). However, using halogen acids alone would involve the problem of a relatively poor yield regarding the precipitation of rare earth metals from the solution. However, the present inventors have found out that also this shortcoming may be met by the separate addition of sulphates to promote the precipitation. Hence, the synergetic combination of a halogen acid leaching and a sulphate-based promotion of the precipitation allows to significantly increase the yield of the recycling. By taking these measures, exemplary embodiment may also omit solvent extraction (which is necessary in conventional approaches) for separating different fractions in a solution. Hence, the technical expenditure for recovering rare earth metal may be significantly reduced.

In contrast to conventional pyrometallurgic methods, the novel processing according to exemplary embodiments of the invention which is based on a hydrometallurgical approach also allows the exploitation of rare earth metals, optionally apart other valuable materials. As compared to conventional pyrometallurgic processes, embodiments of the invention enable a simplified processing, since the energy intensive pyrometallurgic processing before leaching is unnecessary. Furthermore, it is not necessary to provide for two separate hydrometallurgic routes on the one hand for the extraction of the rare earth metals from the slag and on the other hand for the separation of the valuable materials forming part of the alloy. Moreover, embodiments of the invention do not make it necessary to add flux material required for obtaining a desired composition of the slag when smelting during a pyrometallurgic process which increases the amount of material to be processed, further resulting in an undesired dilution of the valuable materials. Furthermore, a closed cycle processing using the aqueous phase keeps the amount of residual liquids very small or even zero according to exemplary embodiments.

### Detailed description of embodiments of the invention

In the following, further exemplary embodiments of the method will be explained.

As halogen acid, it is possible to use hydrochloric acid in a concentration between 5% and 40%, particularly in a concentration between 10% and 25%.

During leaching with hydrochloric acid, the temperature may be in a range between 0°C and 100°C, particularly in a range between 40°C and 90°C. During leaching with phosphoric acid, the temperature may be in a range between 0°C and 200°C, particularly in a range between 40°C and 100°C.

As additive, sodium sulphate (Na₂SO₄) may be used as an aqueous solution. The precipitation may be achieved by an increase of the ph-value using an aqueous solution of NaOH or Na₂CO₃. However, all other sulphates (such as ammonium sulphate) can be used as additive, and other bases (NH₄OH, KOH, etc.) may be used for increasing the ph-value. Furthermore, it is possible to use the corresponding solid materials as an alternative to an aqueous solution.

For the precipitation with sulphates, it is possible to use NaOH in a concentration in a range between 50 g/l and 1300 g/l, particularly in a range between 100 g/l and 400 g/l.

When using hydrochloric acid, a temperature in a range between 0°C to 100°C may be used, particularly in a range between 15°C to 50°C.

A possible additive for use during the precipitation is sodium sulphate in a concentration range between 20 g/l and 170 g/L, particularly in a range between 100 g/l and 170 g/l.

The two sub-steps of precipitation (adding sulphates to the solution of the solubilized metals, and adding an alkaline solution to the solution of the solubilized metals for increasing the ph-value) may be performed sequentially (i.e. one after the other) or simultaneously (i.e. at the same time).

The acidic leaching is performed in a halogen acid solution (preferably in a hydrochloric acid solution). The halogen acid may be the only acid component in the solution.

In an embodiment, the acidic leaching is performed at a pH-value of less than about 3, particularly in a range of ph-values between about 0 and about -1. The disclosed ranges of ph-values particularly ensure that all rare earth metals which are to be recycled as well as a large amount of other metals are completely dissolved from the solid phase into a liquid phase. The ph-value is a measure of the acidity or basicity of a solution. A low pH indicates a high concentration of hydronium ions, while a high pH indicates a low concentration. The pH-value as used herein is not precisely p[H] (i.e. the negative logarithm (base 10) of the molar concentration of dissolved hydronium ions) but takes into account an activity factor. This represents the tendency of hydrogen ions to interact with other components of the solution, which affects among other things the electrical potential read using a pH-meter. As a result, pH can be affected by the ionic strength of a solution. In order to obtain a dissolution of the metals included in the waste material, a very small pH-value is advantageous.

In an embodiment, the waste material comprises nickel metal hydride batteries, magnets, fuel cells and/or luminescent material of energy-efficient lamps. More generally, all rare earth metal comprising residue materials can be used as waste material to be recycled according to exemplary embodiments of the invention. This predominantly includes nickel metal hydride batteries, but also special alloys, magnetic members based on the 4f magnetism of the rare earth metals, high temperature fuel cells or luminescent material in lamps. The term "nickel metal hydride battery" or nickel-metal hydride cell, abbreviated NiMH, may particularly denote a type of secondary electrochemical cell similar to a nickelcadmium cell. The NiMH battery uses a hydrogen-absorbing alloy for the negative electrode instead of cadmium. The positive electrode is nickel oxyhydroxide (NiOOH).

In an embodiment, adding the sulphates to the solution is performed prior to adding the alkaline solution to the solution. In an alternative embodiment, adding the alkaline solution to the solution is performed prior to adding the sulphates to the solution. It is also possible that both additions are performed at the same time, for instance as a common solution.

In an embodiment, the precipitating comprises rising the ph-value in the solution of the solubilized metals. Increasing the pH-value to a certain value can therefore be achieved by adding a basic solution to the acidic solution of the solubilized metals. By properly adjusting the alkaline solution in its chemical properties, it is possible to selectively control which materials are converted into the solid phase. In a preferred embodiment, the ph-value is increased to such a value that selectively only the rare earth metals are converted into the solid phase. The precipitation may comprise any treatment of the solution in such a way that the rare earth metals precipitate as a solid. This may be achieved by partially or completely neutralizing the solution which has been brought into the acid range by the acidic leaching process. For instance, the precipitating may comprise rising the ph-value to a range between 0 and 4, particularly to a range between 1,5 and 2,5. Other ph-values are possible as well.

In an embodiment, the precipitating comprises adding an alkaline solution to the solution of the solubilized metals. Such an alkaline solution may comprises a sodium hydroxide solution, a caustic potash solution, ammonium hydroxide, calcium oxide and/or magnesium oxide. However, other alkaline solutions are possible as well.

In an embodiment, adding the sulphates may comprise adding sulphuric acid and/or a sulphate salt (such as ammonium sulphate, sodium sulphate). The sulphates may promote the formation of solid compounds comprising rare earths, since rare earth sulphates are not easily dissolvable and thereby remain sufficiently stably in the solid phase.

In an advantageous embodiment, the acidic leaching solution comprises or consists of an aqueous solution of hydrochloric acid and the alkaline solution comprises or consists of a sodium hydroxide solution (wherein sulphates may be added thereto). Without wishing to be bound to a specific theory, it is presently believed that the use of a hydrochloric acid for acidic leaching and a sodium hydroxide solution including sulphate for subsequent precipitation results in a high yield of rare earth metal compounds being precipitated. The former ensures that a very large percentage of the metals (preferably also including nickel) are dissolved, the latter ensures an almost complete subsequent precipitation of the rare earth metal compounds.

In an embodiment, the precipitating comprises adding sulphates for precipitating sulphates of the rare earth metals. Without wishing to be bound to a specific theory, it is presently believed that the resulting rare earth sulphates can be denoted as NaRE(SO₄)₂, wherein RE can be La, but also Nd, Pr, Ce, etc. Additionally, sodium can be partly or completely replaced by potassium.

Particularly in an embodiment in which hydrochloric acid is used for the acidic leaching, the addition of sulphates can be used for further increasing the yield of rare earth metal material being in fact precipitated during the precipitating process. The addition of sulphates results in the formation of rare earth sulphate compounds which are not prove to be dissolved again.

In an embodiment, the leaching comprises adding hydrogen peroxide for promoting dissolution of nickel. This embodiment is particularly advantageous when a complete dissolution of all metals is desired, since the addition of hydrogen peroxide further increases the yield of such metals (particularly nickel) which is brought in solution.

In an embodiment, the method further comprises separating the precipitated rare earth metals from a remaining solution, after the precipitation. Hence, it is also possible that other valuable materials are recycled by exemplary embodiments of the invention.

In an embodiment, any of the separating steps (i.e. separating the remaining solid components of the leached waste material from the solution of the solubilized metals, separating the precipitated rare earth metals from the remaining solution) comprises a filtration or centrifugation. Filtration is an appropriate method, since it can reliably separate different components with reasonable expenditure.

In an embodiment, the method further comprises comminuting the waste material before the acidic leaching, particularly by grinding, shearing or shredding. For instance, a used nickel metal hydride battery can be comminuted by cutting it into pieces. An electrode packet may be comminuted by opening the casing in order to increase the active surface on which the acidic leaching solution may attack the components of the waste material. The waste material may be comminuted to particles or granulates of a size in a range between 100 µm to 10 cm, particularly in a range between 1 mm to 2 cm. The comminuted waste material may be directly inserted into the leaching solution without any need for smelting or the like.

In an embodiment, the method further comprises, after having precipitated the rare earth metals, recovering (for instance precipitating selectively) at least one further of the valuable materials, particularly at least one of nickel and cobalt, in the solution while maintaining other metals in dissolved form. Such a precipitation may be performed in a similar way as the precipitation of the rare earth metals, i.e. by a corresponding adjustment of the pH-value. As an alternative to the recovery of the further valuable materials by selectively precipitating, it is also possible to recover them by other methods such as electrolysis.

In an embodiment, the method further comprises, after having precipitated the rare earth metals, recirculation of at least a part of liquids used during executing the method for a next charge of waste material for recycling rare earth metals therein. By taking this measure, the waste liquid to be disposed may be reduced to a minimum. The used solution may be purified to be used again.

In an embodiment, the entire recycling method is purely hydrometallurgic. The term "hydrometallurgical" may particularly denote a part of the field of extractive metallurgy involving the use of aqueous chemistry for the recovery of metals from ores, concentrates, and recycled or residual materials. Hydrometallurgy is typically divided into three general areas, i.e. leaching, solution concentration and purification, and metal recovery. In other words, the entire recycling method may be free of any pyrolysis treatment of the waste material. Alternatively, a pyrometallurgic process may be added only after the separation of the rare earth materials by precipitation. For instance, a calcination process may be added at the end of such a recycling procedure. However, the (optionally comminuted) waste material may be directly placed in an acidic leach without prior pyrolysis. In an embodiment, the temperature of the waste material may remain during the entire recycling method up to and including the selective precipitation of the rare earth metals in the solution below 200°C, particularly below 100°C. Solid components in the leaching solution may comprise pyrolysable material (such as organic substances, plastic, polymers).

In an embodiment, the acidic leaching of the waste material may be performed by using a leaching solution consisting of a halogen acid, i.e. being free of anything the skilled person would interpret as an oxidizing acid. Alternatively, the leaching solution comprising the non-oxidizing acid may optionally comprise one or more additives, for example a contribution of an oxidizing acid. It is also possible that the leaching solution comprises a mixture of two or more different non-oxidizing acids.

In an embodiment, the sulphates are added to the solution of the solubilized metals only for precipitation, i.e. after the leaching and the separating. It is however also possible that sulphates are added to the solution already for leaching.

### Brief description of the drawings

The invention will be described in more detail hereinafter with reference to examples of embodiment but to which the invention is not limited:
Fig. 1 illustrates a block diagram showing processes during carrying out a method of recycling rare earth metals within a waste material according to an exemplary embodiment of the invention.
Fig. 2 is a table showing a typical composition of NiMH batteries.
Fig. 3 is a table illustrating experiments performed by the present inventors.
Fig. 4 shows a table summarizing experimental results obtained by the present inventors.
Fig. 5 shows a table illustrating a composition of a precipitation powder in weight percent from an experiment according to REM/EDX.

### Detailed description of the drawings

The illustrations in the drawings are schematically. In different drawings similar or identical elements are provided with the same reference signs.

In an exemplary embodiment, rare earth metals are recycled from nickel metal hydride batteries. Nickel metal hydride batteries comprise apart from other valuable metals depending on the cell type about 6-10% of elements of the rare earth metals such as La, Ce, Nd and Pr. However, most existing industrial recycling processes extract basically nickel as a pure metal or in the form of alloys, whereas the rare earths are lost in pyrometallurgic slag. In view of the European Community Directives 2006/66/EG and 2008/12/EG, the member states have the obligation to recycle used batteries to a high percentage. The recycling method according to an embodiment of the invention focuses on the additional recycling of the rare earth metals apart from other valuable metals (nickel, cobalt, etc.) in order to improve their relatively poor availability. The disclosed process approach comprises a sufficient crushing or disintegration or grinding of the battery cells and the subsequent leaching in highly acidic solutions. After a filtration of the unsoluble residue, an increase of the pH-value results in a selective precipitation of compounds which preferably comprise elements of the rare earths. Goal of such a process is a complete dissolution of the metallic components of the NiMH cells and on the other hand to obtain a yield as high as possible when precipitating the rare earth metals with a sufficiently low degree of impurities.

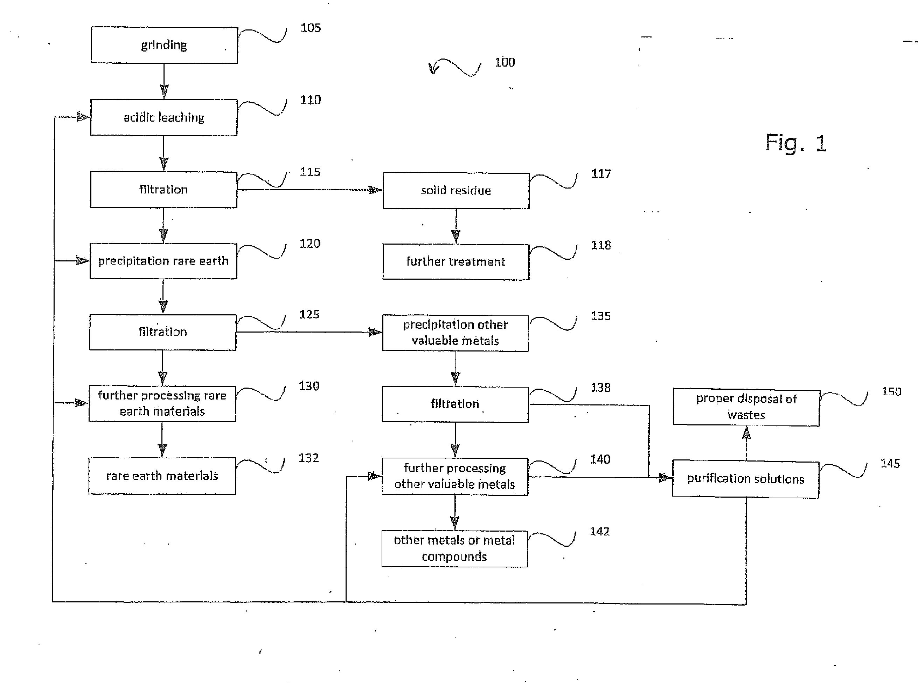

In the following, referring to **Fig. 1****,** a flow chart 100 will be explained illustrating a method of recycling rare earth metals within a nickel metal hydride battery.

In a block 105, the batteries are grinded into small particles thereby simplifying a subsequent acid attack on materials of these particles due to an increase of the surface. Optionally, large pieces which are not to be recycled (for instance foil) may be removed.

In a subsequent block 110, the grinded particles are exposed to an acidic leaching for solubilizing metals (such as rare earth metals, transition metals, etc.) of the battery while maintaining non-metallic materials such as plastic in solid form. For this acidic leaching, hydrochloric acid may be used with a pH-value of for example 1. Hydrochloric acid leaching has the advantage that the yield of dissolving metals is very high, and also nickel can be dissolved. Consequently, the metals are dissolved in the leaching solution, whereas plastic, graphite and other material of the battery remain in a solid phase.

In a subsequent filtration process 115, the solid components are removed by filtration so that the remaining solution still contains all dissolved metal compounds.

In a subsequent procedure 120, selectively the rare earth metals are precipitated in the solution while other metals are maintained in the dissolved form. This may be achieved by increasing the ph-value of the acidic solution, which may be done by adding an alkaline solution, particularly a sodium hydroxide solution. Additionally, a sulphate salt may be added to the solution to provide a reservoir of sulphates improving the amount of precipitated rare earth metals. It is believed that the supply of sulphates promote the formation of rare earth metal-sulphate complexes which do not have the tendency to be dissolved again. Consequently, the rare earth metals are converted into the solid phase to a large extent, whereas other materials remain in the dissolved state.

In a subsequent filtration process, compare block 125, the rare earth metal compounds are separated from the further valuable metals being still dissolved in the solution.

As indicated by a block 130, the precipitated rare earth metal compounds can then be further processed, for instance purified or transferred into another chemical state. For example, rare earth metal compounds may be converted into pure rare earth metals, different rare earth metals may be separated from one another, etc. These products of the method shown in Fig. 1 can then be used for any desired application.

As indicated by a block 132, the rare earth materials are readily recovered.

As indicated by a block 117, the solid residue from the filtration 115 can be made subject to a further treatment (block 118).

As shown in a block 135, other valuable materials being still in the dissolved phase and being obtained by the filtration process 125 can be precipitated, i.e. transferred in the solid phase, by correspondingly changing the pH-value. Alternatively, such valuable materials can be recovered by other processes such as electrolysis. After the precipitation in block 135, a filtration may be performed in block 138 to separate solid components from liquid components. After recovery of these other valuable materials, for instance nickel, these further valuable materials may be further processed in a process 140. Consequently, other metals or metal compounds may be obtained in a block 142.

As indicated by block 145, the solutions obtained in block 138 and optionally in block 130 and/or 140 may be purified so that they can be used again in a subsequent cycle in which a next charge of batteries can be recycled.

As indicated by block 150, solutions which cannot be or cannot be easily recycled, such wastes can be properly disposed.

Nickel metal hydride batteries can be provided in different shapes, such as a cylindrical, prismatic or bottom cell shape. Such batteries comprise a cathode, an anode, an electrolyte, a separator and a casing. The cathode consists in the uncharged state from nickel hydroxide (Ni(OH)₂) on a carrier, such as a perforated steel plate. The hydrogen storage alloys of the anodes can be classified into the types A₂B₇, AB₂ and AB₅, wherein A is lanthanum, cerium, praseodymium, neodymium, titanium or zirconium, whereas B is vanadium, nickel, chrome, cobalt, manganese, aluminum or tin. As an electrolyte, an aqueous KOH solution can be used, and the separators may be manufactured from polyamide, polypropylene or other plastics. A nickel comprising steel plate connected with the anode forms the casing.

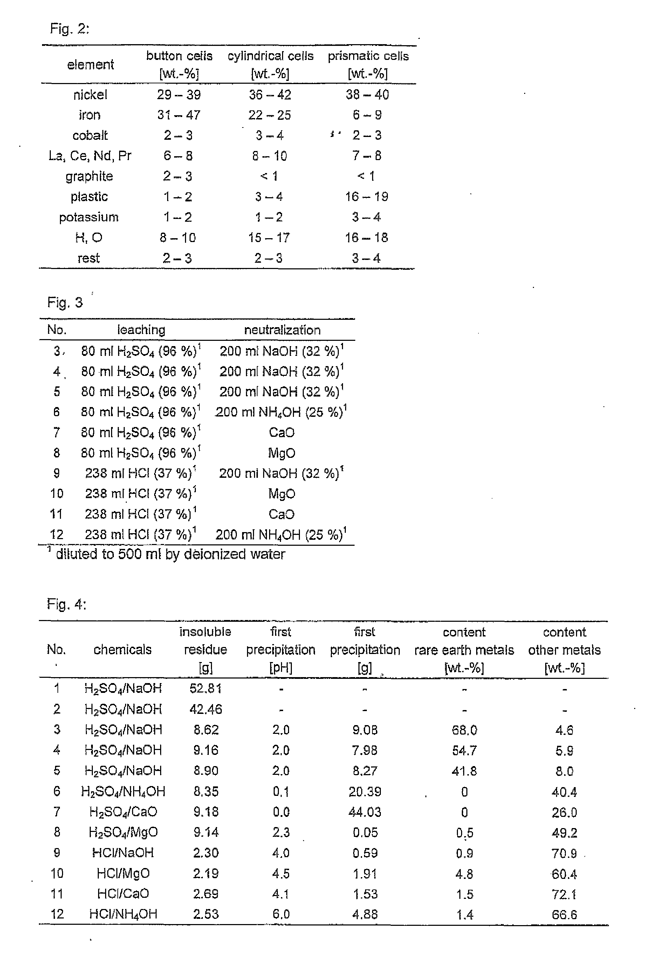

**Fig. 2** shows a typical composition of NiMH batteries (compare Weyhe, 2010 "Stoffliche Verwertung moderner Batteriesysteme", in: Recycling und Rohstoffe, Vol. 3, Neuruppin, Germany, TK Verlag Karl Thomé-Kozmiensky, pages 663-674). As shown in Fig. 2, relevant amounts of La, Ce, Nd and Pr are included in nickel metal hydride batteries.

Exemplary embodiments of the invention provides a process for recovery of such materials from used batteries or other waste material. According to an exemplary embodiment of the invention, the rare earth materials can be recycled in view of their ignoble characteristics in the form of compounds (oxides, sulphates, etc.) with a sufficiently purity. For this reason, hydrometallurgical method steps are carried out according to exemplary embodiments of the invention.

For experiments based on which exemplary embodiments of the invention have been developed, new, rechargeable, commercially available NiMH batteries have been used (Duracell AA/HR6/DC1500 NiMH with a nominal voltage of 1,2 V and a capacity of 2650 mAh).

Firstly, advantageous grinding degrees have been estimated. The grinding of the waste material should be performed to such an extent that dissolution of the valuable metal portion occurs in a realistic time. For this reason, an experiment has been carried out in which two accumulators have been cut into four parts transversal to a longitudinal axis. For a second experiment, two cells have been separated along the length. Subsequently, a leaching of the grinded batteries has been performed in a solution of 80 ml H₂SO₄ (96%) and 100 ml deionized water. After an experimental time of 5 hours at a temperature of 80°C, a filtration using a glass frit has been carried out in order to separate the unsoluble residue from the obtained solution. The result (52,81 g residue at experiment 1, 42,46 g at residue 2, mass of 2 batteries: 60,0 g) shows that for an efficient leaching, a fine-grained waste granulate and a separation of the electrodes packet into its components (cathode, anode and separators) is advantageous. This can be achieved for instance by shearing or shredding.

The present inventors have surprisingly recognized that, when leaching with a halogen acid such as hydrochloric acid, it may be sufficient for an efficient recovery of rare earth materials to divide a battery into less than ten parts, particularly into less than five parts, more particularly into four parts, before the leaching. Even with such a small number of parts, a basically complete dissolution of the metallic components of the cells is possible within reasonable time. This is advantageous since a coarser degree of disintegration of the batteries is sufficient in this case, thereby rendering the recovery process more efficient and more simple. For instance, when disintegrating two batteries each having a mass of 60 g in four pieces each and using HCl, the leaching resulted in only 2,2 g residue, in contrast to 52,8 g when using H₂SO₄.

During other experiments, two batteries were cut along the length and subsequently, individual layers have been separated from one another manually or assisted by a machine.

In the following, the experiments for separating of rare earth compounds will be explained.

**Fig. 3** illustrates some of the experiments which have been carried out by the present inventors in order to evaluate which combination of an acid used for the leaching and a base used for rising the pH-value yields the best result. On the one hand, a complete dissolution of the valuable materials is advantageous, in order to avoid a separation of these two fractions (unsoluble residue and solution). On the other hand, the increase of the pH-value should result in a complete and selective separation of the rare earth metals from other components, in order to obtain these with a high yield and a sufficient purity.

In the individual experiments, a first step was the leaching at 80°C for a duration of 5 hours, before a filtration of the unsoluble residue from the solution was carried out. The neutralizing agent has been added to the latter at room temperature under continuous stirring until a solid material was formed. After this separation, the continuation of the increase of the pH-value resulted in the recovery of further solid materials. Twice repetition of this experiment with sulphuric acid and sodium hydroxide solution (experiment 3-5) showed how reproducible the individual experimental results are. After drying/calcination of the obtained solids at 120°C for 24 hours and 400°C for further 6 hours, the EDX unit of the scanning electron microscope (SEM) was used for characterizing the chemical composition.

The table shown in **Fig. 4** clearly indicates that, in dependency of the used chemicals for the leaching and the precipitation, very different results can be obtained. The two columns "first precipitation" indicate the mass of the first solid obtained by increasing the pH-value after its drying and calcination as well as the pH-value at which this was separated from the solution. The last two columns indicate the composition of the dried and calcinated solid (analysis using SEM/EDX), divided into metals of the rare earth materials and further metals, wherein the non-indicated non-metals (O, S, Cl, etc.) make the difference to 100%.

As can be taken from Fig. 4, particularly the combination of sulphuric acid for leaching and sodium hydroxide solution for neutralization resulted in a high amount of compounds of the rare earth materials precipitating from the solution. Experiments 3-5 show that 6,17 g (10,3%), 4,37 g (7,3%) and 3,46 g (5,8%) of elements of rare earth materials can be obtained from 60,0 g educt (2 NiMH batteries), so that the yield is very good.

Fig. 4 further shows that when leaching using sulphuric acid, the unsoluble residue was larger than when using hydrochloric acid. An optical inspection showed that in the latter case only plastic (separator foils, etc.) remains, wherein when using H₂SO₄, also the electrode lattices are not completely dissolved. An analysis using EDX after the sulphuric acid leaching showed as a composition nickel with small amounts of lanthanum, oxygen and sulphur as impurities.

In the following, two further experiments performed by the present inventors will be described:

### Experiment 13a:

1. Two cells (VARTA, 2100 mAh, AA Mignon HR6 Ni-MH 1,2V) are cut into four pieces each
2. The cut scrap is put into a flask together with H₂O
3. Adding of 250 ml HCl, 37 %
4. Fill up to 500 ml with H₂O
5. Slowly heat up to 80 °C, subsequently maintain the temperature constant over the entire leaching time, subsequently cooling to room temperature
6. Filtration and washing the residue with H₂O (only 2,21 g unsoluble residue from 60,0 g batteries)
7. Dilution of the filtrate with H₂O to 1000 ml
8. Providing 500 ml of the diluted filtrate in a beaker
9. Adding NaOH-solution (200 g/l) up to pH 3,0
10. Adding 500 ml Na₂SO₄-solution (150 g/l)
11. Filtration and washing of the solid with H₂O
12.Drying the solid at 120 °C

Result: 5,75 g rare earth double sulphate powder (from one cell, since from step 8 onwards only half of the solution has been used)

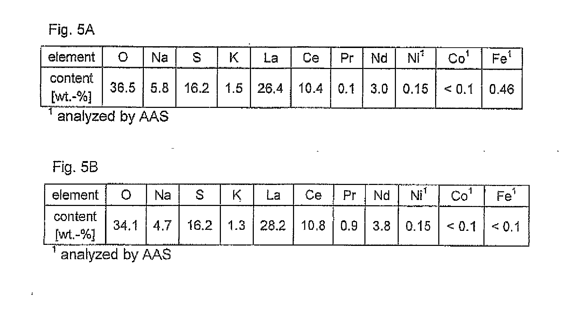

Detailed analysis results of experiment 13a are shown in **Fig. 5A****.** The precipitation primarily consists of sulphates. Since for the sulphate ion (SO₄²⁻) the ratio O/S is 1,996, also oxides and more complex compounds with sulphur and oxygen can be included.

The concentration of possible impurities (Ni, Fe, Co, Cr, etc.) was too small to be determined by EDX.

### Experiment 13b:

8. Provide 500 ml of the diluted filtrate (compare Experiment a) in a beaker
9. Add 500 ml Na₂SO₄-solution (150 g/l)
10. Add NaOH-solution (200 g/l) up to pH 2,0
11. Filtration and washing the solid by H₂O
12. Drying the solid at 120 °C

Result: 6,82 g rare earth double sulphate powder (from one cell, since from step 8 onwards, only half of the solution is used)

The concentration of possible impurities (Ni, Fe, Co, Cr, etc.) was too small to be determined by EDX.

Detailed analysis results of experiment 13b are shown in **Fig. 5B****.**

The experimental series carried out has two essential goals. On the one hand, an almost complete dissolution of the valuable metals included in the NiMH cells should be obtained, in order to prevent separation into two different fractions in the first process step, which would render their recycling with high yields difficult. On the other hand, the subsequent addition of a base should result in an almost complete precipitation of the rare earth components with a sufficiently small content of impurities.

The first goal can be particularly obtained very well when using hydrochloric acid (see Fig. 4, 9-11). The second goal can be particularly obtained very well when using a sulphuric acid leaching of the batteries (see Fig. 4, 3-5). However, hydrochloric acid leaching alone does not provide a sufficient yield in rare earth metal precipitation, and sulphuric acid does not provide a sufficient dissolution of metals (see Fig. 4, 3-5, 9-11). It is believed that the advantageous influence of the sulphuric acid is due to the provision of sulphates. Hence, both goals can be achieved very well when using hydrochloric acid for leaching and adding sulphates (for instance in the form of sodium sulphate) during precipitation.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa.

## Claims

1. A method of recycling rare earth metals included in a waste material, the method comprising:
acidic leaching of the waste material using a non-oxidizing acid, wherein the non-oxidizing acid is a halogen acid, for solubilizing at least a part of metals included in the waste material while maintaining at least a part of non-metallic materials of the waste material in solid form;
separating the remaining solid components of the leached waste material from a solution of the solubilized metals;
precipitating selectively at least a part of the rare earth metals in the solution while maintaining other metals in dissolved form, wherein the precipitating comprises:
adding sulphates to the solution of the solubilized metals; and
adding an alkaline solution to the solution of the solubilized metals for increasing the pH-value.

2. The method according to claim 1, wherein the halogen acid is hydrochloric acid.

3. The method according to claim 1 or 2, wherein the acidic leaching is performed at a pH-value of less than 3, particularly in a range of pH-values between 0 and -1.

4. The method according to any of claims 1 to 3, wherein the waste material comprises at least one of the group consisting of a nickel metal hydride battery, a magnet, a fuel cell, and a luminescent member of an energy-efficient lamp.

5. The method according to any of claims 1 to 4, wherein adding the sulphates is performed prior to adding the alkaline solution.

6. The method according to any of claims 1 to 4, wherein adding the alkaline solution is performed prior to adding the sulphates

7. The method according to any of claims 1 to 4, wherein the alkaline solution and the sulphates are added simultaneously.

8. The method according to any of claims 1 to 7, wherein the alkaline solution comprises one of the group consisting of a sodium hydroxide solution, a caustic potash solution, ammonium hydroxide, calcium oxide, and magnesium oxide.

9. The method according to claims 2 and 8, wherein the acidic leaching comprises hydrochloric acid and the alkaline solution comprises a sodium hydroxide solution.

10. The method according to any of claims 1 to 9, wherein the precipitating comprises adding hydrogen peroxide.

11. The method according to any of claims 1 to 10, further comprising separating at least a part of the precipitated rare earth metals from a remaining solution.

12. The method according to any of claims 1 to 11, further comprising comminuting at least a part of the waste material before the acidic leaching, particularly by at least one of the group consisting of grinding, shearing, and shredding.

13. The method according to any of claims 1 to 12, further comprising, after having precipitated the rare earth metals recovering selectively at least a part of at least one further of the metals, particularly at least one of nickel and cobalt, in the solution while maintaining other metals in dissolved form.

14. The method according to any of claims 1 to 13, further comprising, after having precipitated the rare earth metals, recirculation of at least a part of liquids used during executing the method for a next charge of waste material for recycling at least a part of rare earth metals included therein.

15. The method according to any of claims 1 to 14, wherein at least all method steps before and including the precipitation, particularly the entire method, consist of hydrometallurgical processes.

## Patentansprüche

1. Ein Verfahren zum Rückgewinnen von seltenen Erden Metallen, welche in einem Abfallmaterial enthalten sind, wobei das Verfahren aufweist:
saures Extrahieren des Abfallmaterials unter Verwendung einer nichtoxidierenden Säure, wobei die nicht-oxidierende Säure eine Halogensäure ist, zum Lösen von zumindest einem Teil von Metallen, welche in dem Abfallmaterial enthalten sind, während zumindest ein Teil von nicht-metallischen Materialien des Abfallmaterials in einer festen Form bleibt;
Trennen der verbleibenden festen Komponenten des extrahierten Abfallmaterials von einer Lösung der gelösten Metalle;
selektives Ausfällen von zumindest einem Teil der seltenen Erden Metalle in der Lösung, während andere Metalle in gelöster Form bleiben, wobei das Ausfällen aufweist:
Hinzufügen von Sulfaten zu der Lösung der gelösten Metalle; und
Hinzufügen einer alkalischen Lösung zu der Lösung der gelösten Metalle zum Erhöhen des pH-Werts.

2. Das Verfahren gemäß Anspruch 1, wobei die Halogensäure Chlorwasserstoffsäure ist.

3. Das Verfahren gemäß Anspruch 1 oder 2, wobei das saure Extrahieren bei einem pH-Wert durchgeführt wird, welcher geringer als 3 ist, insbesondere in einem Bereich von pH-Werten zwischen 0 und -1.

4. Das Verfahren gemäß irgendeinem der Ansprüche 1 bis 3, wobei das Abfallmaterial zumindest eines aus der Gruppe aufweist, welche aus einer Nickel Metall Hydrid Batterie, einem Magnet, einer Brennstoffzelle und einem lumineszierenden Element eines energieeffizienten Leuchtmittels besteht.

5. Das Verfahren gemäß irgendeinem der Ansprüche 1 bis 4, wobei das Hinzufügen der Sulfate vor dem Hinzufügen der alkalischen Lösung durchgeführt wird.

6. Das Verfahren gemäß irgendeinem der Ansprüche 1 bis 4, wobei das Hinzufügen der alkalischen Lösung vor dem Hinzufügen der Sulfate durchgeführt wird.

7. Das Verfahren gemäß irgendeinem der Ansprüche 1 bis 4, wobei die alkalische Lösung und die Sulfate gleichzeitig hinzugefügt werden.

8. Das Verfahren gemäß irgendeinem der Ansprüche 1 bis 7, wobei die alkalische Lösung eines aus der Gruppe aufweist, welche aus einer Natriumhydroxid Lösung, einer Kaliumhydroxid Lösung, Ammoniumhydroxid, Kalziumoxid und Magnesiumoxid besteht.

9. Das Verfahren gemäß den Ansprüchen 2 und 8, wobei das saure Extrahieren Chlorwasserstoffsäure aufweist und die alkalische Lösung eine Natriumhydroxid Lösung aufweist.

10. Das Verfahren gemäß irgendeinem der Ansprüche 1 bis 9, wobei das Ausfällen das Hinzufügen von Wasserstoffperoxid aufweist.

11. Das Verfahren gemäß irgendeinem der Ansprüche 1 bis 10, ferner aufweisend ein Trennen von zumindest einem Teil der ausgefällten seltenen Erden Metalle von einer verbleibenden Lösung.

12. Das Verfahren gemäß irgendeinem der Ansprüche 1 bis 11, ferner aufweisend ein Zerkleinern von zumindest einem Teil des Abfallmaterials vor dem sauren Auslaugen, insbesondere mittels zumindest einem aus der Gruppe bestehend aus Mahlen, Abscheren und Schreddern.

13. Das Verfahren gemäß irgendeinem der Ansprüche 1 bis 12, ferner aufweisend
nach dem Ausfällen der seltenen Erden Metalle ein selektives Rückgewinnen von zumindest einem Teil von zumindest einem weiteren der Metalle, insbesondere zumindest eines von Nickel und Kobalt, in der Lösung, während andere Metalle in der gelösten Form bleiben.

14. Das Verfahren gemäß irgendeinem der Ansprüche 1 bis 13, ferner aufweisend
nach dem Ausfällen der seltenen Erden Metalle ein Rückführen von zumindest einem Teil von Flüssigkeiten, welche während dem Ausführen des Verfahrens verwendet wurden, für eine nächste Charge von Abfallmaterial zum Rückgewinnen von zumindest einem Teil von seltenen Erden Metallen, welche darin enthalten sind.

15. Das Verfahren gemäß irgendeinem der Ansprüche 1 bis 14, wobei zumindest alle Verfahrensschritte vor und einschließlich dem Ausfällen, insbesondere das gesamte Verfahren, aus hydrometallurgischen Prozessen besteht.

## Revendications

1. Procédé de recyclage de métaux des terres rares contenus dans un déchet, le procédé comprenant :
la lixiviation acide du déchet au moyen d'un acide non oxydant, dans lequel l'acide non oxydant est un acide halogéné, pour solubiliser au moins une partie des métaux contenus dans le déchet tout en maintenant au moins une partie des matériaux non métalliques du déchet sous forme solide ;
la séparation entre les composants solides restants du déchet lixivié et une solution des métaux solubilisés ;
la précipitation sélective d'au moins une partie des métaux des terres rares dans la solution tout en maintenant les autres métaux sous forme dissoute, dans laquelle la précipitation comprend :
l'ajout de sulfates à la solution des métaux solubilisés ; et
l'ajout d'une solution alcaline à la solution des métaux solubilisés pour augmenter la valeur du pH.

2. Procédé selon la revendication 1, dans lequel l'acide halogéné est l'acide chlorhydrique.

3. Procédé selon la revendication 1 ou 2, dans lequel la lixiviation acide est réalisée à une valeur de pH inférieure à 3, située en particulier dans une plage de valeurs de pH allant de 0 à -1.

4. Procédé selon l'une quelconque des revendications 1 à 3, dans lequel le déchet est au moins un déchet choisi dans le groupe constitué d'une batterie au nickel-métal-hydrure, d'un aimant, d'une pile à combustible et d'un élément luminescent d'une lampe écoénergétique.

5. Procédé selon l'une quelconque des revendications 1 à 4, dans lequel l'ajout des sulfates est réalisé avant l'ajout de la solution alcaline.

6. Procédé selon l'une quelconque des revendications 1 à 4, dans lequel l'ajout de la solution alcaline est réalisé avant l'ajout des sulfates.

7. Procédé selon l'une quelconque des revendications 1 à 4, dans lequel la solution alcaline et les sulfates sont ajoutés simultanément.

8. Procédé selon l'une quelconque des revendications 1 à 7, dans lequel la solution alcaline comprend un élément choisi dans le groupe constitué d'une solution d'hydroxyde de sodium, d'une solution de potasse caustique, de l'hydroxyde d'ammonium, de l'oxyde de calcium et de l'oxyde de magnésium.

9. Procédé selon les revendications 2 et 8, dans lequel la lixiviation acide comprend de l'acide chlorhydrique et la solution alcaline comprend une solution d'hydroxyde de sodium.

10. Procédé selon l'une quelconque des revendications 1 à 9, dans lequel la précipitation comprend l'ajout de peroxyde d'hydrogène.

11. Procédé selon l'une quelconque des revendications 1 à 10, comprenant en outre la séparation entre au moins une partie des métaux des terres rares précipités et une solution restante.

12. Procédé selon l'une quelconque des revendications 1 à 11, comprenant en outre la fragmentation d'au moins une partie du déchet avant la lixiviation acide, en particulier par au moins une action choisie dans le groupe constitué du broyage, du cisaillement et du déchiquetage.

13. Procédé selon l'une quelconque des revendications 1 à 12, comprenant en outre, après la précipitation des métaux des terres rares, la récupération sélective d'au moins une partie d'au moins un autre des métaux, en particulier au moins un métal choisi parmi le nickel et le cobalt, dans la solution tout en maintenant les autres métaux sous forme dissoute.

14. Procédé selon l'une quelconque des revendications 1 à 13, comprenant en outre, après la précipitation des métaux des terres rares, la remise en circulation d'au moins une partie des liquides utilisés lors de la mise en oeuvre du procédé pour une prochaine charge de déchet à des fins de recyclage d'au moins une partie des métaux des terres rares contenus dans ces liquides.

15. Procédé selon l'une quelconque des revendications 1 à 14, dans lequel au moins toutes les étapes de procédé avant la précipitation et y compris la précipitation, en particulier le procédé entier, consistent en des procédés d'hydrométallurgie.
